# EUROPÄISCHE PATENTANMELDUNG

(11) **EP 3 117 747 A1**
(43) Veröffentlichungstag der Anmeldung: **18.01.2017**
(21) Anmeldenummer: 16020237.0
(22) Anmeldetag: 20.06.2016
(51) Int. Cl.: A47J 37/04, B65D 5/74, B65D 75/66, A23L 5/10, A23L 27/00, A23L 27/10

(54) **AROMAEINHEIT ZUR VERWENDUNG BEI DER AROMATISIERUNG VON GARGUT AN GARGERÄTEN**

(30) Priorität: 14.07.2015 DE 102015111364
(71) Anmelder: Miele & Cie. KG, 33332 Gütersloh (DE)
(72) Erfinder: Becker, Torben, 33613 Bielefeld (DE); Metz, Thomas, 32257 Bünde (DE); Hoffmeister-Paul, Astrid, 32052 Herford (DE); Barnekow, Rainer, 37696 Marienmünster (DE)

(57) **Zusammenfassung**

Aromaeinheit (50) zur Verwendung bei der Aromatisierung von Gargut (2) an Gargeräten (1) umfassend einen Aromaträger (51) und ein Aromamittel (52), wobei der Aromaträger (51) ein Lebensmittel (53) umfasst und das Aromamittel (52) ein Konzentrat ist.

## Beschreibung

Die vorliegende Erfindung betrifft eine Aromaeinheit zur Verwendung bei der Aromatisierung von Gargut an bzw. in Gargeräten. Dabei umfasst die Aromaeinheit wenigstens einen Aromaträger und wenigstens ein Aromamittel.

Im Stand der Technik ist es bekannt, beim Zubereiten und Garen von Lebensmitteln Aromen beispielsweise in Form von Ölen auf das Lebensmittel bzw. das Gargut aufzubringen, um das Lebensmittel bzw. Gargut zu aromatisieren. Beispielsweise ist mit der DE 10 2013 108 992 A1 ein Verfahren zum Garen und Aromatisieren von Gargut in einem Garraum eines Gargeräts und ein entsprechendes Gargerät bekannt geworden, wobei ein über eine Heizeinrichtung aufheizbarer Extraktionsbehälter vorgesehen ist. In den Extraktionsbehälter wird in Wasser gelöstes Extrakt eingefüllt. Anschließend wird während des Garens das Wasser und das darin gelöste Extrakt erwärmt und verdampft. Der aromatisierte Dampf wird in den Garraum hinein geleitet. Nachteilig an dem bekannten Verfahren und der bekannten Vorrichtung ist, dass der Extraktionsbehälter nach jedem Garvorgang aufwendig gereinigt werden muss, um bei einem nachfolgenden Garvorgang eine unerwünschte Aromatisierung durch Aromarückstände in dem Extraktionsbehälter und den Leitungen zu vermeiden. Außerdem kann es für den Benutzer gegebenenfalls schwierig sein, die richtige Dosierung des in Wasser gelösten Extrakts herzustellen und einzufüllen.

Es sind auch Garverfahren bekannt geworden, bei denen mit Aromastoffen versehenes Stroh oder dergleichen in den Garraum eingebracht wird und dort mit Dampf in Kontakt kommt, sodass eine Aromatisierung des Gargutes erfolgt. Auch hier verbleibt die Frage der Dosierung und der Reproduzierbarkeit.

Es ist deshalb die Aufgabe der vorliegenden Erfindung, eine Aromaeinheit zur Verwendung bei der Aromatisierung von Gargut zur Verfügung zu stellen, womit eine einfachere und reproduzierbare Anwendung ermöglicht wird.

Diese Aufgabe wird durch eine Aromaeinheit mit den Merkmalen des Anspruchs 1 gelöst. Bevorzugte Weiterbildungen der erfindungsgemäßen Aromaeinheit sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Aromaeinheit dient zur Verwendung bei der Aromatisierung von Gargut an und insbesondere in Gargeräten. Eine erfindungsgemäße Aromaeinheit umfasst wenigstens einen Aromaträger und wenigstens ein Aromamittel. Dabei umfasst der Aromaträger wenigstens ein Lebensmittel und das Aromamittel ist ein Konzentrat.

Die erfindungsgemäße Aromaeinheit hat viele Vorteile. Ein erheblicher Vorteil der erfindungsgemäßen Aromaeinheit besteht darin, dass das Trägermaterial - also der Aromaträger - wenigstens ein Lebensmittel umfasst. Der Aromaträger trägt das Aromamittel, wobei das Aromamittel insbesondere ein Fluid ist oder fluide Bestandteile aufweist. Eine erfindungsgemäße Aromaeinheit erlaubt eine reproduzierbare Aromatisierung von Gargütern, da jedes Mal eine definierte Aromaeinheit verwendet wird. Die Aromaeinheit besteht immer aus den gleichen Bestandteilen, sodass der Benutzer keine Schwierigkeiten mit der Dosierung hat.

Vorzugsweise besteht der Aromaträger aus wenigstens einem Lebensmittel. Das bedeutet, dass der Aromaträger nicht nur ein Lebensmittel umfasst, sondern aus wenigstens einem Lebensmittel besteht. Dadurch ergibt sich eine einfache Herstellbarkeit. Ein weiterer Vorteil ist, dass gegebenenfalls eine Kennzeichnungspflicht für Chemikalien entfällt. Außerdem ist auch die Entsorgung einfacher, wenn das Trägermaterial ein Lebensmittel ist.

Vorzugsweise besteht der Aromaträger wenigstens zum Teil aus einem Öl und/oder Pflanzenteilen und/oder Alkohol und/oder Stärke und/oder Aktivkohle und/oder Bambuskohle und/oder Wasser und/oder Mikrokapseln oder dergleichen mehr. Bei den Pflanzenteilen kann es sich zum Beispiel um getrocknete und/oder ausgelaugte Pflanzenteile handeln. Beispielsweise können Pflanzenteile aus Tee, Kraut oder auch Apfelscheiben verwendet werden.

In bevorzugten Weiterbildungen ist der Aromaträger als Granulat oder in Tablettenform ausgebildet. Dabei kann der Aromaträger beispielsweise eine runde, eckige oder auch eine einfache symmetrische oder einfache geometrische Form aufweisen. Möglich ist es auch, dass der Aromaträger aus einer Mehrzahl von geometrischen Formen oder Elementen besteht, die zusammengesetzt sind.

Vorteilhafterweise umfasst das Aromamittel wenigstens einen wasserlöslichen Aromastoff. Das Aroma bzw. das Aromamittel kann auch an den Aromaträger gebunden sein. Möglich ist es auch, dass eine Abgabe des Aromas über Wärme oder UV-Licht erfolgt oder wenigstens begünstigt wird.

In allen Ausgestaltungen ist es bevorzugt, dass der Aromaträger in wenigstens einem Behälter aufgenommen ist. Besonders bevorzugt umfasst die Aromaeinheit einen Behälter, in dem der Aromaträger aufgenommen ist.

Es ist besonders bevorzugt, dass der Behälter durch aromadichte Wandungen verschlossen ist. Eine solche Ausgestaltung ist sehr vorteilhaft. Aromamittel sind oft aus einer Vielzahl von Stoffen und Verbindungen zusammengesetzt. Dabei ist meist wenigstens ein Anteil leichtflüchtig und ein anderer Anteil schwerflüchtig. Auch ist es möglich, dass sich die Aromen untereinander in der erforderlichen Konzentration und der absoluten Menge unterscheiden. Das bedeutet, dass bei der Lagerung ohne aromadichte Verpackung eine zeitliche Veränderung der Zusammensetzung erfolgen kann, da leichtflüchtige Anteile sich verflüchtigen können, sodass sich die Konzentration zu den schwerflüchtigen Anteilen hin verschiebt. Ein durch aromadichte Wandungen verschlossener Behälter verhindert zuverlässig eine solche Konzentrationsverschiebung.

Bevorzugt ist der Behälter an wenigstens einer Seite durch einen Folienabschnitt verschlossen. Besonders bevorzugt ist der Behälter an wenigstens zwei Seiten durch jeweils wenigstens einen Folienabschnitt verschlossen. Insbesondere ist der Behälter an zwei sich insbesondere gegenüberliegenden Enden durch jeweils wenigstens einen Folienabschnitt verschlossen. Dabei ist wenigstens ein Folienabschnitt dafür vorgesehen, durchstochen, aufgeschlitzt oder aufgeschnitten oder sonst wie geöffnet zu werden.

Besonders bevorzugt wird an zwei Seiten und insbesondere an zwei sich gegenüberliegenden Enden ein Folienabschnitt vorgesehen, der vor oder bei der Verwendung geöffnet und z. B. automatisch durchstochen oder aufgeschnitten wird. Nach dem Öffnen des Behälters ist der Aromaträger mit dem Aromamittel zugänglich und kann zur Aromatisierung verwendet werden.

Insbesondere ist an dem Behälter wenigstens ein Hilfsmittel zur Öffnung des Behälters und insbesondere der Folienabschnitte vorgesehen. Ein solches Hilfsmittel kann beispielsweise als Lasche oder Abreißlasche oder dergleichen ausgebildet sein. Möglich ist es auch, dass ein umklappbarer Haken oder dergleichen vorgesehen ist, der schwenkbar an dem Behälter angeordnet ist, um einen Folienabschnitt zu öffnen. Möglich ist es aber auch, einen Folienabschnitt vor dem Einsetzen der Aromaeinheit in das Gargerät mit beispielsweise einer handelsüblichen Schere oder einem Messer oder dergleichen aufzustechen oder aufzuschneiden.

In allen Ausgestaltungen ist es bevorzugt, dass wenigstens ein Folienabschnitt aus einem wasser- oder dampflöslichen Material besteht. Bei solchen Ausgestaltungen kann beispielsweise zur Aromatisierung die Aromaeinheit mit Wasserdampf beaufschlagt werden, was dann zu einer Auflösung des Folienabschnitts führt, wonach dann das im Inneren des Behälters vorhandene und durch den Aromaträger getragene Aromamittel zugänglich ist und zur Aromatisierung des Gargutes verwendet wird.

In bevorzugten Weiterbildungen ist der Behälter wiederverwendbar. Dabei ist es möglich, dass der Behälter von dem Benutzer selbst wieder auffüllbar ist. Möglich ist es auch, dass der Behälter in der Art eines Pfandsystems an den Verkäufer oder Hersteller zurückgegeben wird, der anschließend den Behälter neu auffüllt, sodass eine Wiederverwendung gewährleistet ist.

Vorzugsweise ist der Behälter lebensmittelecht und besteht wenigstens zum Teil aus einem Metall wie Aluminium und/oder Kunststoff. Insbesondere ein hitzebeständiger Kunststoff ist vorgesehen. Eine metallische Wandung kann beschichtet sein, um eine Oxidation zu verhindern oder um den Kontakt mit dem Aromamaterial auszuschließen.

Es ist bevorzugt, dass die Aromaeinheit bzw. der Behälter an wenigstens zwei Seiten poröse Abschnitte umfasst. Insbesondere weist der Behälter an wenigstens zwei sich gegenüberliegenden Enden jeweils wenigstens einen porösen Abschnitt auf. Dabei ist es möglich, dass der Behälter aufgrund der porösen Abschnitte nicht aromadicht ausgebildet ist.

Um einen derartigen mit porösen Abschnitten versehenen Behälter aromadicht zu gestalten, können die porösen Abschnitte zur Lagerung verklebt werden. Möglich und bevorzugt ist es auch, dass der Aromaträger mit dem Aromamittel von einer Umverpackung aromadicht umgeben ist. Dabei kann auch der Behälter von der Umverpackung umgeben sein. Eine solche Umverpackung kann durch eine dünne Metall- oder Kunststofffolie realisiert werden, die vom Benutzer aufgerissen wird, wenn der Benutzer die Aromaeinheit verwenden möchte.

Einwegverpackungen bzw. Einwegbehälter haben den Vorteil, dass bei jeder erneuten Verwendung jeweils eine neue Aromaeinheit verwendet wird, sodass sich eine besonders hohe Ergebnissicherheit gibt, da bei jedem erneuten Garvorgang insoweit die gleichen Ausgangsbedingungen vorliegen. Ein weiterer Vorteil einer Einwegverpackung ist, dass es zu keiner Aromenverschleppung kommen kann. Möglich ist es aber auch, dass eine Einwegverpackung einen Mehrportionsbehälter umfasst, der bei mehreren Garvorgängen verwendet werden kann.

Metallische Folienabschnitte an dem Behälter haben den Vorteil, temperaturbeständig zu sein. Außerdem sind metallische Folien kostengünstig. Ein wichtiger Vorteil ist auch die Lebensmittelechtheit geeigneter metallischer Folien.

Weitere Vorteile und Merkmale der vorliegenden Erfindung ergeben sich aus den Ausführungsbeispielen, die im Folgenden mit Bezug auf die beiliegenden Figuren erläutert werden.
- Figur 1: eine perspektivische Ansicht eines Gargeräts;
- Figur 2: eine perspektivische Ansicht eines Backofens;
- Figur 3: einen schematischen Querschnitt eines Gargeräts;
- Figur 4: einen schematischen Querschnitt durch eine Halterungseinrichtung mit einer Aromaeinheit;
- Figur 5: einen Querschnitt entlang der Linie A-A aus Figur 4;
- Figur 6: einen schematischen Querschnitt durch eine andere Halterungseinrichtung mit einer Aromaeinheit;
- Figur 7: noch einen schematischen Querschnitt durch eine weitere Halterungseinrichtung mit einer Aromaeinheit;
- Figur 8: einen schematischen Querschnitt durch noch eine weitere Halterungseinrichtung mit einer Aromaeinheit; und
- Figur 9: einen zeitlichen Verlauf einer Garguttemperatur bei einem Garvorgang.

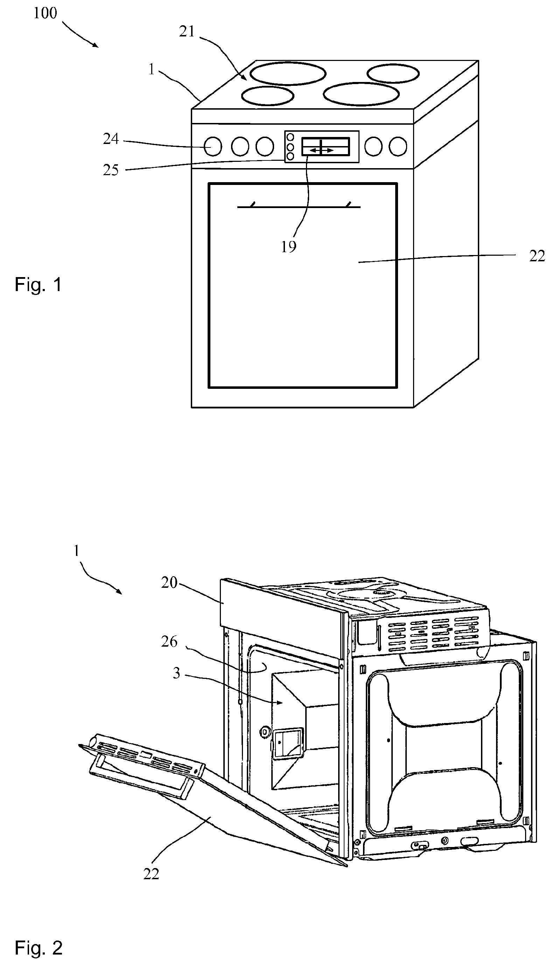

Figur 1 zeigt eine schematische perspektivische Ansicht eines Gargeräts 100, welches über einen Backofen verfügt. Der Backofen 20 ist über eine Tür 22 verschlossen. Das Garsystem 100 bzw. das Gargerät 1 aus Figur 1 verfügen weiterhin über ein Kochfeld 21. Bedienelemente 24 und eine Anzeige 25 dienen zur Steuerung und zur Anzeige der Betriebszustände. Die Anzeige 25 kann auch als Touchscreen ausgeführt sein, sodass durch Berühren von grafisch dargestellten Schaltflächen oder dergleichen eine Auswahl der Betriebszustände möglich ist. Beispielsweise kann ein Einstellelement 19 wie ein Slider auch grafisch auf dem Touchscreen 25 angezeigt werden.

Das Gargerät 1 aus Figur 1 eignet sich zur Aromatisierung während des Garvorgangs. Die konstruktiven Details des Verfahrensablaufs werden im Folgenden erläutert.

Figur 2 zeigt eine ebenfalls schematische perspektivische Darstellung eines Backofens 20 als Gargerät 1. Hier ist der Backofen 20 als Einbaugerät ausgeführt. Die geöffnete Tür 22 erlaubt einen Blick in den Garraum 3 hinein, von dem eine Garraumwandung 26 erkennbar ist.

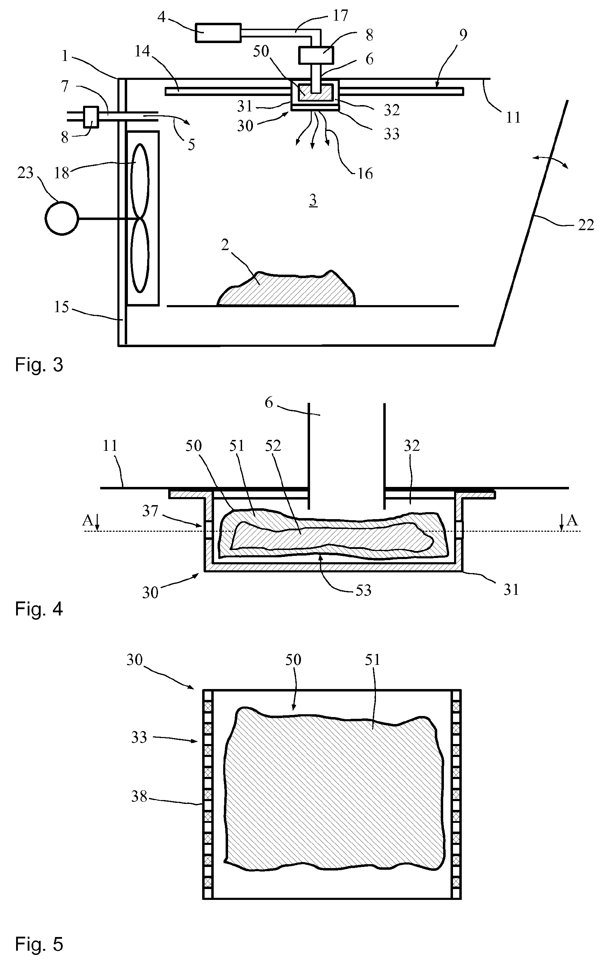

Figur 3 zeigt eine stark schematische Darstellung eines Gargeräts 1 in einem Querschnitt, wobei der Garraum 3 über eine verschließbare Tür 22 geöffnet werden kann.

In dem Garraum 3 ist auf einem Backblech oder dergleichen stark schematisch ein Gargut 2 abgebildet, welches bei einem Garvorgang in dem Gargerät 1 wahlweise aromatisiert werden kann.

Das Gargerät 1 ist Teil eines Garsystems 100 und umfasst neben dem Gargerät 1 noch eine Halterungseinrichtung 30, in der eine Aromaeinheit 50 angeordnet ist.

Die Halterungseinrichtung 30 ist hier an eine Koppeleinrichtung 10 in dem Garraum 3 gekoppelt und kann vom Benutzer jederzeit mit wenigen Handgriffen aus dem Garraum 3 entnommen werden.

Der Garraum 3 weist eine Garraumdecke 11 auf. An der Rückwand 15 ist ein Gebläse 18 vorgesehen, welches über einen Motor 23 antreibbar ist. Gegebenenfalls ist an dem Gebläse ein Ringheizkörper vorgesehen, um im Umluftbetrieb die Luft zu erwärmen.

Jedenfalls verfügt das Gargerät 1 hier über einen Oberhitzeheizkörper 14 als Strahlungsheizquelle 9. Weiterhin ist ein Dampferzeuger 4 vorgesehen, der über eine Strömungsverbindung 17 und über ein steuerbares und schaltbares Ventil 8 mit einer Dampfeinlassdüse 6 in Strömungsverbindung steht.

Die Dampfeinlassdüse 6 ist in einem mittleren Bereich der Garraumdecke vorgesehen und ist so angeordnet, dass der aus der Dampfeinlassdüse 6 austretende Dampf direkt und unmittelbar in die Halterungseinrichtung 30 eingeleitet wird.

Zusätzlich ist eine zweite Dampfeinlassdüse 7 vorgesehen, die hier an der Rückwand 15 des Garraums angeordnet ist und diese durchtritt. Auch die zweite Dampfeinlassdüse 7 ist über ein zugeordnetes und steuerbares Ventil 8 ein- und ausschaltbar. Das bedeutet, dass der aus der zweiten Dampfeinlassdüse 7 austretende Dampf 5 bei Bedarf zu- und abgeschaltet werden kann. Gleichfalls kann der aus der ersten Dampfeinlassdüse 6 austretende Dampf ein- und ausgeschaltet werden.

Die Halterungseinrichtung 30 verfügt über einen Halterungskörper 31, an dem eine Aufnahmekammer 32 und eine Zerstäubereinrichtung 33 ausgebildet sind.

Die Aufnahmekammer 32 ist so bemessen, dass dort eine Aromaeinheit 50 vorzugsweise passgenau einsetzbar ist.

Die erste Dampfeinlassdüse 6 und die Halterungseinrichtung 30 mit der Aromaeinheit 50 sind so positioniert, dass der aus der ersten Dampfeinlassdüse 6 austretende Dampf durch die Aromaeinheit 50 durchgeleitet wird und schließlich als aromatisierter Dampf 16 aus der Halterungseinrichtung 30 austritt. Dabei wird der austretende aromatisierte Dampf 16 durch die Zerstäubereinrichtung 33 der Halterungseinrichtung 30 zerstäubt, sodass eine homogene Verteilung des aromatisierten Dampfs 16 in dem Garraum 3 erreicht wird.

Gegebenenfalls kann zur weiteren Erhöhung der Homogenität das Gebläse 18 gegebenenfalls in unterschiedlichen Drehrichtungen alternierend betätigt werden.

Das Gargerät 1 ermöglicht durch die zwei Dampfeinlassdüsen 6, 7 und durch die Strahlungsheizquelle 9 als Oberhitzeheizkörper 14 und durch die Halterungseinrichtung 30 mit der Aromaeinheit 50 eine gezielte Aromatisierung des Garguts 2. Dabei können unterschiedliche Verfahrensabläufe realisiert werden, da unabhängig von einer Aromatisierung durch aromatisierten Dampf 16 auch mit Dampf aus der zweiten Dampfeinlassdüse 7 geheizt werden kann. Unabhängig von einer Beheizung über Dampf kann auch über den Oberhitzeheizkörper oder über andere Strahlungsheizquellen, wie sie bei Backöfen üblich sind, der Garraum beheizt werden.

Figur 4 zeigt eine Ausgestaltung der Halterungseinrichtung 30 in einem seitlichen Querschnitt, wobei in der Aufnahmekammer 32 der Halterungseinrichtung 30 eine Aromaeinheit 50 abgebildet ist. Die Aromaeinheit 50 kann dicht in der Aufnahmekammer 32 der Halterungseinrichtung 30 angeordnet werden. Der durch die erste Dampfeinlassdüse 6 zugeführte Dampf wird auf bzw. in die Aromaeinheit 50 hineingeleitet. Die Aromaeinheit 50 besteht aus einem Aromamittel 52 und einem Aromaträger 51 und gegebenenfalls weiteren Bestandteilen. Hier ist schematisch dargestellt, dass der Aromaträger 51 das Aromamittel 52 im Inneren aufnimmt. Möglich ist es beispielsweise, dass ein geeignetes Lebensmittel als Aromaträger 51 mit dem Aromamittel 52 getränkt ist. Durch den schnell darauf strömenden Dampf aus der ersten Dampfeinlassdüse 6 wird das Aromamittel 52 ausgelöst und/oder mitgerissen. Hier sind seitliche Fluidauslässe 37 abgebildet, die Teil einer Zerstäubereinrichtung 33 sein können.

Figur 5 zeigt den Querschnitt A-A aus Figur 4 und stellt eine Draufsicht auf die Halterungseinrichtung 30 und die darin in der Aufnahmekammer 32 aufgenommenen Aromaeinheit 50 dar. Hier sind die seitlichen Auslasswandungen 38 erkennbar, in denen jeweils eine Vielzahl von Fluidauslässen 34 vorgesehen sind, die als Zerstäubereinrichtung 33 dienen.

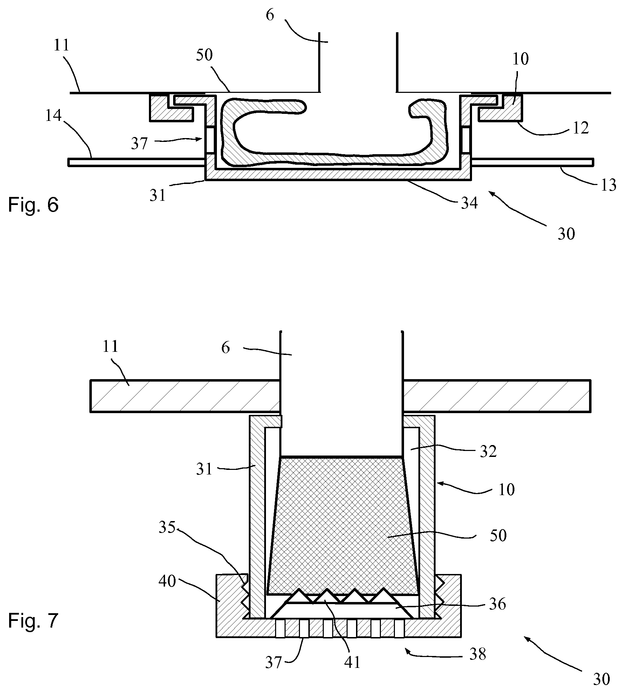

Figur 6 zeigt eine Ausgestaltung der Halterungseinrichtung 30, die im Garraum 3 an eine Koppeleinrichtung 10 angekoppelt ist. Hier werden seitliche überstehende Stege der Halterungseinrichtung 30 bzw. des Halterungskörpers 31 in entsprechende Schlitze an der Koppeleinrichtung 10 eingebracht.

Die Koppeleinrichtung 10 kann so angeordnet sein, dass eine Montage der Halterungseinrichtung 30 ohne Kollision mit dem Oberhitzeheizkörper 14 möglich ist. In Figur 6 ist erkennbar, dass eine Unterkante 12 der Koppeleinrichtung 10 deutlich weiter oben angeordnet ist als eine Unterkante 13 des Oberhitzeheizkörpers 14. Das bedeutet, dass ohne eingesetzte Halterungseinrichtung 30 die vollständige freie Arbeitshöhe in dem Garraum zur Verfügung steht. Je nach Ausgestaltung und Höhe der Halterungseinrichtung 30 wird sich bei Wahl der Aromatisierung die verfügbare Höhe des Garraums 3 etwas verringern.

Figur 7 zeigt eine Ausgestaltung, bei der die Halterungseinrichtung 30 ebenfalls an der Garraumdecke 11 angebracht ist. Hier besteht die Halterungseinrichtung 30 aus einem Halterungskörper 31 und einem Abschlussdeckel 40, der unten an das offene Ende der Halterungseinrichtung 30 anschraubbar ist. Ein Befestigungsmittel 35 wie ein Gewinde oder dergleichen kann zur Befestigung des Abschlussdeckels 40 an dem Halterungskörper 31 dienen. In dem Inneren der Halterungseinrichtung 30 ist eine Aufnahmekammer 32 ausgebildet, in der eine Aromaeinheit zu erkennen ist. In dem Deckel bzw. Abschlussdeckel 40 der Halterungseinrichtung 30 sind mehrere Fluidauslässe 37 an einer Auslasswandung 38 vorgesehen. Über die Fluidauslässe 37 wird der austretende aromatisierte Dampf zuverlässig zerstäubt, sodass eine Tropfenbildung und ein Abtropfen des Aromamittels auf das Gargut zuverlässig verhindert werden. Ein auf das Gargut fallender Tropfen könnte zu einer lokal zu starken Aromatisierung führen.

Zusätzlich eingezeichnet ist in der Zerstäuberkammer ein Öffnungselement 41 bzw. mehrere Öffnungselemente 41, die hier in die untere Wandung der Aromaeinheit 50 einstechen und diese damit öffnen. Von oben greifen entsprechende Öffnungselemente in die obere Wandung der Aromaeinheit 50 ein, sodass der von oben durch die Dampfeinlassdüse 6 in die Aromaeinheit 50 eintretende Dampf durchgeleitet wird und unten aus der Aromaeinheit 50 austritt und durch die Zerstäubereinrichtung 33 mit der Zerstäuberkammer 36 und dem Fluidauslass 37 zuverlässig zerstäubt wird.

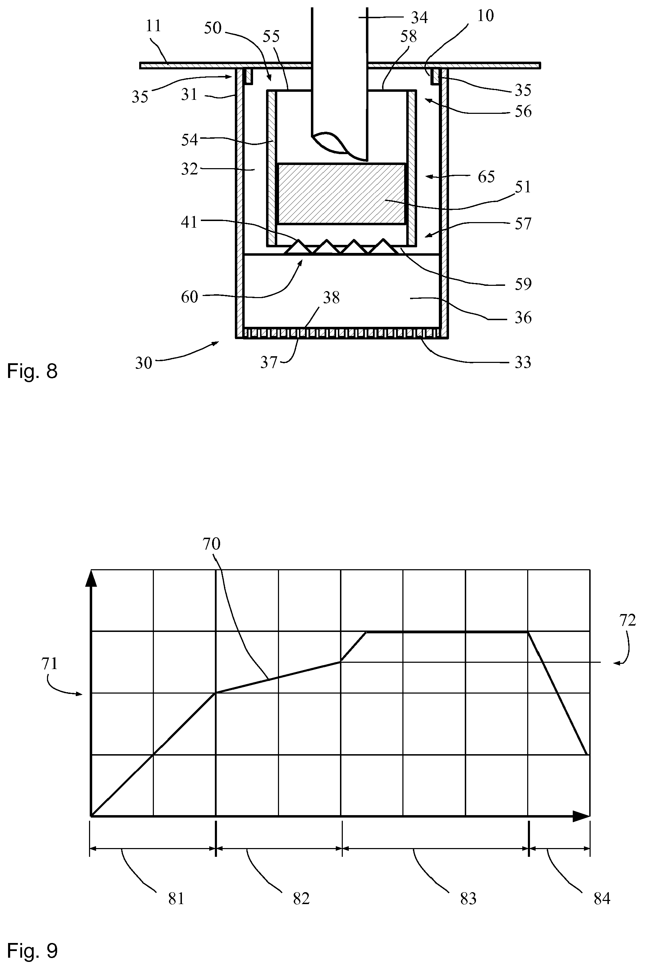

Figur 8 zeigt eine Variante, bei dir die Halterungseinrichtung 30 ebenfalls an der Garraumdecke 11 eines hier nicht weiter dargestellten Gargeräts 1 angebracht ist. Der Halterungskörper 31 ist hier mit der Koppeleinrichtung 10 beispielsweise verschraubt, um die Halterungseinrichtung 30 zuverlässig in dem Garraum 3 aufzunehmen.

In dem Aufnahmeraum 32 der Halterungseinrichtung 30 ist ein Behälter 54 der Aromaeinheit 50 zu erkennen. Im Inneren des Behälters 54 ist der Aromaträger 51 abgebildet, zudem von oben über die erste Dampfeinlassdüse 6 als Fluideinlass 34 der Zerstäubereinrichtung 33 reiner Dampf zugeführt wird. Der zugeführte Dampf tritt durch den Aromaträger 51 hindurch und tritt an den Öffnungselementen 41 vorbei in die Zerstäuberkammer 36 über. Am Ausgang der Zerstäuberkammer 36 ist eine Auslasswandung 38 vorgesehen, an der eine Vielzahl von Fluidauslässen 37 angeordnet ist, an denen sich dort eventuell bildende Tropfen direkt zerstäubt werden.

Die Öffnungselemente 41 im Inneren der Halterungseinrichtung 30 dienen als Hilfsmittel zur Öffnung des Behälters 54 der Aromaeinheit 50. Die Aromaeinheit 50 verfügt hier über einen Behälter 54 als aromadichte Verpackung, wobei die Aromaeinheit 50 einen stabilen Körper aufweist, der hier vorzugsweise etwa zylindrisch ausgestaltet ist. An den axialen Enden, also am oberen Ende des Behälters 54 und am unteren Ende des Behälters 54 sind an den Seiten 56, 57 Folienabschnitte 58, 59 vorgesehen, die beim Lagern der Aromaeinheit 50 für eine aromadichte Verpackung sorgen.

Soll bei einem Garvorgang das Gargut aromatisiert werden, so wird die Halterungseinrichtung 30 aus dem Garraum 3 entnommen und es wird in den Aufnahmeraum 32 der Halterungseinrichtung 30 eine Aromaeinheit 50 eingebracht. Zunächst liegt der Folienabschnitt 59 des Behälters 54 auf den spitzen Öffnungselementen 41 auf. Danach wird die Halterungseinrichtung mit der daran aufgenommenen Aromaeinheit in den Garraum 3 verbracht und der Halterungskörper 31 wird über die Befestigungsmittel 35 mit der Koppeleinrichtung 10 gekoppelt und hier beispielsweise verschraubt. Dabei drückt die Dampfeinlassdüse 6 mit dem unteren Ende zunächst gegen den Folienabschnitt 58, bis der Folienabschnitt 58 ebenso wie der Folienabschnitt 59 von den Öffnungselementen 41 durchstochen wird. Dadurch wird gewährleistet, dass beim Starten eines Garprogramms mit Aromatisierung die Aromaeinheit jedenfalls geöffnet ist.

Figur 9 zeigt ein stark schematisches Schaubild eines Verfahrensablaufs bzw. eines Temperaturverlaufs bei einem Gar- und Aromatisierungsvorgang.

Zu Beginn weist die Oberfläche des Garguts Umgebungstemperatur auf. Zunächst wird der Garraum aufgeheizt, wobei dies insbesondere über thermische Strahlungsheizquellen oder eine separate Dampferzeugungseinrichtung erfolgt. Das Ventil 8 der ersten Dampfeinlassdüse 6 ist geschlossen, solange, bis die Mindesttemperatur 71 erreicht wird.

Nach dem Erreichen der Mindesttemperatur steigt die Temperatur der Gargutoberfläche mit reduzierter Geschwindigkeit an, um eine effektive Aromatisierungsphase zur Verfügung zu stellen. In dieser zweiten Phase 82 wird vorzugsweise nur die erste Dampfeinlassdüse mit Dampf beaufschlagt, sodass der erzeugte Dampf durch die Aromaeinheit 50 hindurchtritt und mit dem Aromamittel zusammen in den Garraum des Gargeräts 1 eintritt. Während in der ersten Phase 81 keine Aromatisierung erfolgt, wird in der zweiten Phase 82 das Gargut aromatisiert.

Schließlich wird eine obere Grenztemperatur 72 erreicht. Ab dieser Temperatur ist die Aromatisierung nicht mehr so effektiv und/oder unwirksam, sodass in der dritten Phase 83 die Aromatisierung wieder beendet werden kann. Möglich ist es aber auch, weiterhin aromatisierten Dampf 16 in den Garraum 3 einzuleiten, wenn die Aromaeinheit 50 zum einmaligen Gebrauch bestimmt ist. Am Ende schließt sich eine vierte Phase 84 an, in der die Temperatur an der Oberfläche des Garguts erheblich zurückgeht. Denkbar ist es auch, am Ende des Garvorgangs eine oder die einzige Aromatisierungsphase vorzusehen. Dann wird aromatisierter Dampf 16 in den Garraum 3 geleitet, wenn die Temperatur der Gargutoberfläche wieder unterhalb der oberen Grenztemperatur 72 liegt.

Das Garsystem 100 umfasst ein Gargerät 1 und die Halterungseinrichtung 30, an der wenigstens eine Aromaeinheit 50 aufgenommen werden kann. Die Aromaeinheit 50 kann aromadicht verschlossen sein und wird insbesondere durch an der Halterungseinrichtung 30 und/oder dem Garraum vorgesehene Öffnungselemente 41 beim Einsetzen der Halterungseinrichtung 30 in den Garraum 3 geöffnet.

Durch die aromadichte Verschließung der Aromaeinheit kann das Konzentrationsverhältnis einzelner Bestandteile des Aromamittels über längere oder sogar eine lange Zeit gewährleistet werden.

Zur Aromatisierung wird Dampf von einem Dampferzeuger unmittelbar in die Halterungseinrichtung bzw. in die Aufnahmekammer der Halterungseinrichtung hinein geleitet. Dort tritt der Dampf durch die Aromaeinheit hindurch und nimmt das Aromamittel auf. Der Dampferzeuger kommt nicht mit Aromamitteln in Kontakt kommt. Eine aufwendige Reinigung ist nicht nötig.

Eine zweite Dampfeinlassdüse 7 kann dazu dienen, unabhängig von einer möglichen Aromatisierung zusätzlich frischen und reinen Dampf in den Garraum einzuleiten. Die Aromaeinheit weist insbesondere einen Behälter 54 auf, an dem aromadichte Wandungen 55 vorgesehen sind. Insbesondere zwei gegenüberliegende Enden weisen Folienabschnitte 58, 59 auf, die im Lagerungszustand aromadicht ausgeführt sind und die sich automatisch beim Einsetzen der Halterungseinrichtung 30 in den Garraum 3 öffnen lassen können.

Gegebenenfalls ist es auch möglich, dass die Aromaeinheit 50 über keine aromadichte Wandungen verfügt und von einer Umverpackung 65 umgeben ist, die geöffnet oder entfernt werden muss, wenn die Aromaeinheit 50 verwendet werden soll.

Das Gargerät 1 wird über ein Garprogramm gesteuert, sodass zu jeweils geeigneten Zeitpunkten aromatisierter Dampf und/ oder reiner Wasserdampf eingeleitet wird. Die Anzahl der Dampfstöße zur Aromatisierung hängt insbesondere von der Art des Garguts ab. Weitere Einflüsse, wie die Garraumgröße und die Gargeräteart werden bei der Programmierung berücksichtigt.

In allen Ausgestaltungen kann eine Durchspülung des Garraums reduziert oder abgeschaltet werden, wenn eine Aromatisierung erfolgt.

Nach dem Ende eines Garprogramms kann ein automatisches De-Aromatisierungs-Programm durchgeführt werden, bei dem die Innenoberfläche des Garraums und die weiteren mit dem Aromamittel in Kontakt kommenden Flächen auf eine solche Temperatur erhitzt werden, dass sich die Aromastoffe bzw. Aromamittel zersetzen. Beispielsweise kann eine Oberflächentemperatur größer 100°C oder 150°C eingestellt werden.

### Bezugszeichenliste

- 1: Gargerät
- 2: Gargut
- 3: Garraum
- 4: Dampferzeuger
- 5: Dampf, Frischdampf
- 6,7: Dampfeinlassdüse
- 8: Ventil
- 9: Strahlungsheizquelle, Heizkörper
- 10: Koppeleinrichtung
- 11: Garraumdecke
- 12, 13: Unterkante
- 14: Oberhitzeheizkörper
- 15: Rückwand
- 16: aromatisierter Dampf
- 17: Strömungsverbindung
- 18: Gebläse
- 19: Einstellelement
- 20: Backofen
- 21: Kochfeld
- 22: Tür (Backofen)
- 23: Motor
- 24: Bedienelement
- 25: Anzeige, Touchscreen
- 26: Garraumwand
- 30: Halterungseinrichtung
- 31: Halterungskörper
- 32: Aufnahmekammer
- 33: Zerstäubereinrichtung
- 34: Fluideinlass
- 35: Befestigungsmittel, Gewinde
- 36: Zerstäuberkammer
- 37: Fluidauslass
- 38: Auslasswandung
- 40: Abschlussdeckel
- 41: Öffnungselement
- 50: Aromaeinheit
- 51: Aromaträger
- 52: Aromamittel
- 53: Lebensmittel
- 54: Behälter
- 55: aromadichte Wandung
- 56, 57: Seite
- 58, 59: Folienabschnitt
- 60: Hilfsmittel
- 61: Öffnungselement
- 65: Umverpackung
- 70: Temperaturverlauf
- 71: Mindesttemperatur
- 72: Maximaltemperatur
- 81: erste Phase
- 82: zweite Phase
- 83: dritte Phase
- 84: vierte Phase
- 100: Garsystem

## Patentansprüche

1. Aromaeinheit (50) zur Verwendung bei der Aromatisierung von Gargut (2) an Gargeräten (1) umfassend wenigstens einen Aromaträger (51) und wenigstens ein Aromamittel (52),
**dadurch gekennzeichnet,**
**dass** der Aromaträger (51) wenigstens ein Lebensmittel (53) umfasst und dass das Aromamittel (52) ein Konzentrat ist.

2. Aromaeinheit (50) nach Anspruch 1, wobei der Aromaträger (51) aus wenigstens einem Lebensmittel (53) besteht.

3. Aromaeinheit (50) nach einem der vorhergehenden Ansprüche, wobei der Aromaträger (51) wenigstens zum Teil aus einem Öl, Pflanzenteilen, Alkohol, Stärke, Aktivkohle oder Bambuskohle, Wasser oder Mikrokapseln besteht.

4. Aromaeinheit (50) nach einem der vorhergehenden Ansprüche, wobei der Aromaträger (51) als Granulat oder in Tablettenform ausgebildet ist.

5. Aromaeinheit (50) nach einem der vorhergehenden Ansprüche, wobei das Aromamittel (52) wenigstens einen wasserlöslichen Aromastoff umfasst.

6. Aromaeinheit (50) nach einem der vorhergehenden Ansprüche, wobei der Aromaträger (51) in einem Behälter (54) aufgenommen ist.

7. Aromaeinheit (50) nach dem vorhergehenden Anspruch, wobei der Behälter (54) durch aromadichte Wandungen (55) verschlossen ist.

8. Aromaeinheit (50) nach einem der beiden vorhergehenden Ansprüche, wobei der Behälter (54) an wenigstens zwei Seiten (56, 57) durch jeweils wenigstens einen Folienabschnitt (58, 59) verschlossen ist.

9. Aromaeinheit (50) nach dem vorhergehenden Anspruch, wobei wenigstens ein Folienabschnitt (58, 59) dafür vorgesehen ist, durchstochen oder aufgeschnitten zu werden.

10. Aromaeinheit (50) nach einem der beiden vorhergehenden Ansprüche, wobei an dem Behälter (54) wenigstens ein Hilfsmittel (60) zur Öffnung des Behälters (54) und insbesondere der Folienabschnitte (58, 59) vorgesehen ist.

11. Aromaeinheit (50) nach Anspruch 8, wobei wenigstens ein Folienabschnitt (58, 59) aus einem wasser- oder dampflöslichen Material besteht.

12. Aromaeinheit (50) nach einem der Ansprüche 6 bis 11, wobei der Behälter (54) wiederverwendbar ist.

13. Aromaeinheit (50) nach einem der Ansprüche 6 bis 12, wobei der Behälter (54) lebensmittelecht ist und wenigstens zum Teil aus einem Metall wie Aluminium und/oder Kunststoff besteht.

14. Aromaeinheit (50) nach Anspruch 6, wobei der Behälter (54) an wenigstens zwei Seiten (56, 57) poröse Abschnitte umfasst.

15. Aromaeinheit (50) nach einem der vorhergehenden Ansprüche, wobei der Aromaträger (51) mit dem Aromamittel (52) von einer Umverpackung (65) umgeben ist.
